# EUROPEAN PATENT APPLICATION

(11) **EP 4 712 188 A1**
(43) Date of publication of application: **18.03.2026**
(21) Application number: 25150643.2
(22) Date of filing: 08.01.2025
(51) Int. Cl.: H01M 10/0525, H01M 50/103, H01M 50/15, H01M 50/176, H01M 50/548, H01M 50/553

(54) **SECONDARY BATTERY AND BATTERY PACK**

(30) Priority: 13.09.2024 KR 20240125794
(71) Applicant: SAMSUNG SDI CO., LTD., Yongin-si, Gyeonggi-do 17084 (KR)
(72) Inventor: Bae, Kwang Soo, 16678 Suwon-si, Gyeonggi-do (KR); Yong, Jun Sun, 16678 Suwon-si, Gyeonggi-do (KR); Lee, Jun Hyung, 16678 Suwon-si, Gyeonggi-do (KR); Kim, Ji Hwan, 16678 Suwon-si, Gyeonggi-do (KR); Roh, Heyoung Cheoul, 16678 Suwon-si, Gyeonggi-do (KR)
(74) Representative: Gulde & Partner

(57) **Abstract**

A secondary battery and a battery pack are disclosed. A secondary battery includes an electrode assembly including an electrode tab, a case in which the electrode assembly is accommodated, a connection member electrically connected to the electrode tab, a side terminal electrically connected to the connection member, a cap plate passing through the side terminal and coupled to an opening of the case, and an insulating part insulating the cap plate from the side terminal and insulating the cap plate from the electrode assembly.

## Description

### BACKGROUND

### 1. Field

Aspects of embodiments of the present disclosure relate to a secondary battery and a battery pack.

### 2. Discussion of Related Art

In general, the demand for secondary batteries with high energy density and capacity has recently been dramatically increasing according to the rapid supply of electronic apparatuses using batteries, such as portable phones, notebook computers, and electric vehicles. Accordingly, research and development for improving performance of lithium secondary batteries is actively being conducted.

Lithium secondary batteries are batteries which include positive electrodes and negative electrodes including active materials capable of intercalation and deintercalation of lithium ions and electrolytes and produce electric energy through oxidation and reduction reactions when lithium ions are intercalated/deintercalated at the positive electrodes and negative electrodes.

The above information disclosed in this Background section is provided for enhancement of understanding of the background of the present disclosure, and, therefore, may contain information that does not constitute related (or prior) art.

### SUMMARY

According to an aspect of embodiments of the present invention, a secondary battery and a battery pack in which a cap plate and an insulating part for insulation of an electrode assembly are integrated to omit an unnecessary or undesired process, simplify an assembly process, and improve insulation reliability are provided.

The above and other aspects and features of the present disclosure will be described in or will be apparent from the following description of some embodiments of the present disclosure.

According to one or more embodiments of the present invention, a secondary battery includes an electrode assembly including an electrode tab, a case in which the electrode assembly is accommodated, a connection member electrically connected to the electrode tab, a side terminal electrically connected to the connection member, a cap plate passing through the side terminal and coupled to an opening of the case, and an insulating part insulating the cap plate from the side terminal and insulating the cap plate from the electrode assembly.

The side terminal may include a boss terminal passing through the cap plate and located on the connection member, and an external terminal located outside the cap plate and welded to the boss terminal.

The insulating part may include a first insulator insulating the cap plate from the side terminal and a second insulator insulating the cap plate from the electrode assembly.

The first insulator may include a first plate between the external terminal and the cap plate, a second plate between the cap plate and the connection member, and a connection part connecting the first plate and the second plate and surrounding the boss terminal.

The first insulator may be insert-injected on the cap plate.

A movement prevention part configured to prevent movement of the first insulator may be located on the cap plate.

The movement prevention part may include a communication hole passing through the cap plate such that the first plate and the second plate are connected to each other, a first seating groove in an upper surface of the cap plate such that the first plate is seated in the first seating groove, and a second seating groove in a lower surface of the cap plate such that a portion of the second plate is accommodated in the second seating groove.

The first insulator and the second insulator may be integrally provided via a coupling part.

The coupling part may include a coupling post protruding downward from the first insulator, and a coupling hole in the second insulator such that the coupling post is coupled thereto.

The coupling post may be coupled to the coupling hole through hot stacking.

The coupling post may have a greater length than a length of the coupling hole.

The secondary battery may include a coupling reinforcement part configured to reinforce coupling between the coupling hole and the coupling post.

The coupling reinforcement part may include multiple stepped surfaces on an inner surface of the coupling hole.

The coupling reinforcement part may include a tapered surface on an inner surface of the coupling hole.

The coupling reinforcement part may include an uneven surface on an inner surface of the coupling hole.

The coupling hole may have a greater diameter than a diameter of the coupling post, and the coupling reinforcement part may include a plurality of ribs protruding from an inner surface of the coupling hole toward the coupling post.

The side terminal, the cap plate, and the insulating part may be modularized as one component.

The insulating part may include a first insulator insulating the cap plate from the side terminal and a second insulator insulating the cap plate from the electrode assembly, and the first insulator may be integrated with the cap plate through insert-injection.

The first insulator and the second insulator may be integrated through hot stacking.

According to one or more embodiments of the present invention, a battery pack includes a housing and one or more secondary batteries in the housing.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating a structure of a battery pack according to an embodiment of the present invention;
FIG. 2 is a schematic perspective view illustrating a structure of a secondary battery according to an embodiment of the present invention;
FIG. 3 is a schematic exploded perspective view illustrating the structure of the secondary battery according to an embodiment of the present invention;
FIG. 4 is a cross-sectional view along the line A-A of FIG. 2;
FIG. 5 is a schematic view illustrating a structure of an electrode assembly according to an embodiment of the present invention;
FIG. 6 is a schematic view illustrating a structure of a positive tab of the electrode assembly according to an embodiment of the present invention;
FIG. 7 is a schematic view illustrating a structure of a negative tab of the electrode assembly according to an embodiment of the present invention;
FIG. 8 is a schematic perspective view illustrating a structure of some components of the secondary battery according to an embodiment of the present invention;
FIG. 9 is a schematic exploded perspective view illustrating the structure of the components of the secondary battery according to an embodiment of the present invention;
FIG. 10 is a schematic exploded perspective view from another angle that illustrates the structure of the components of the secondary battery according to an embodiment of the present invention;
FIG. 11 is a cross-sectional view along the line B-B of FIG. 8;
FIG. 12 is a schematic cross-sectional view illustrating a coupling state of a coupling part according to an embodiment of the present invention;
FIG. 13 is a cross-sectional view illustrating a state in which the coupling part is coupled through hot stacking according to an embodiment of the present invention;
FIG. 14 is a schematic cross-sectional view illustrating a coupling reinforcement part of the secondary battery according to an embodiment of the present invention;
FIGS. 15 to 17 are cross-sectional views showing modified examples of the coupling reinforcement part of the secondary battery according to some embodiments of the present invention; and
FIG. 18 is a schematic view showing an assembly process of the secondary battery according to an embodiment of the present invention.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical aspects and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

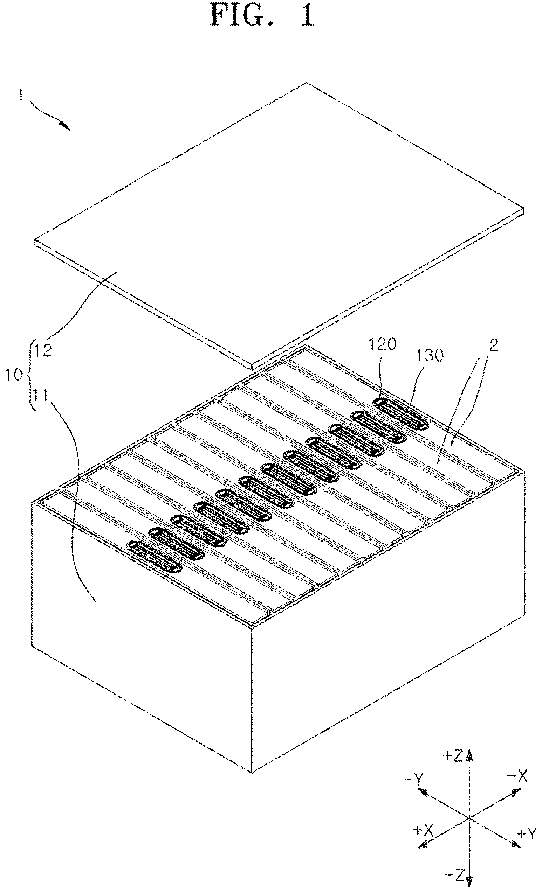

FIG. 1 is a schematic perspective view illustrating a structure of a battery pack 1 according to an embodiment of the present invention.

Referring to FIG. 1, the battery pack 1 according to the present embodiment may include a housing 10 and a secondary battery 2.

The housing 10 may generally form an exterior of the battery pack and provide a space in which the secondary battery 2 may be accommodated.

The housing 10 according to the present embodiment may include a housing body 11 and a cover 12.

The housing body 11 may be formed in a hollow box shape having an open side. However, a cross-section of the housing body 11 is not limited to a quadrangular shape, as illustrated in FIG. 1, and a design of the cross-section may be changed to any of various shapes, such as a polygonal shape, a circular shape, and an elliptical shape.

The cover 12 may be coupled to the housing body 11 and may close an inner space of the housing body 11. As an example, the cover 12 may be formed in a generally plate shape and disposed to face an open side of the housing body 11. The cover 12 may be fixed to the housing body 11 through any of various coupling methods, such as bolting, welding, and fit-coupling methods.

The secondary battery 2 may be a unit structure for storing and supplying power in the battery pack.

The secondary battery 2 may be disposed in the housing 10. The secondary battery 2 may be provided as a plurality of secondary batteries 2. The plurality of secondary batteries 2 may be disposed in two or more rows in at least any of a longitudinal direction (a +X-axis direction based on FIG. 1) of the housing 10 and a width direction (a +Y-axis direction based on FIG. 1) of the housing 10. In FIG. 1, an example, in which the plurality of secondary batteries 2 are disposed in twelve rows in the longitudinal direction of the housing 10 is illustrated, but an arrangement form of the plurality of secondary batteries 2 is not limited thereto, and a design thereof may be variously changed. The plurality of secondary batteries 2 may be disposed parallel to each other. A design of the number of secondary batteries 2 may be variously changed according to a size, a shape, and the like of the housing 10.

The plurality of secondary batteries 2 may be electrically connected to each other. As an example, adjacent secondary batteries 2 may be connected in series or parallel through a busbar. The busbar may be formed of a material through which a current may flow, such as copper, aluminum, or nickel. A design of a specific shape of the busbar may be varied to any of various shapes which may electrically connect the adjacent secondary batteries 2.

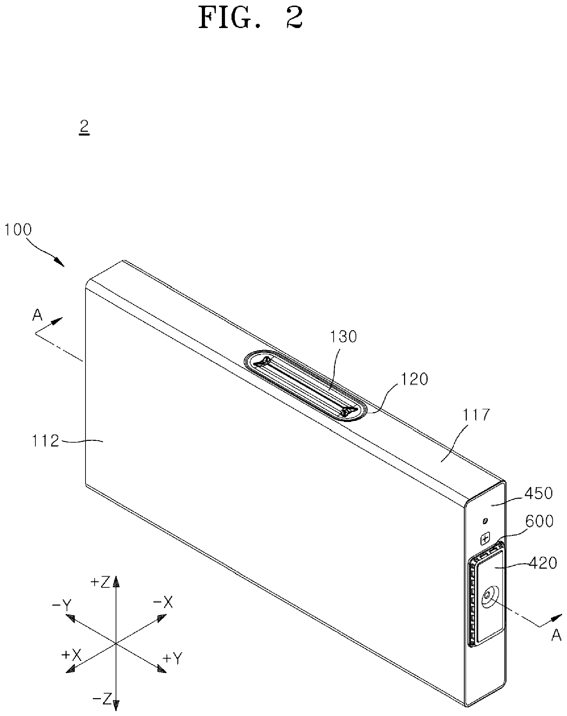

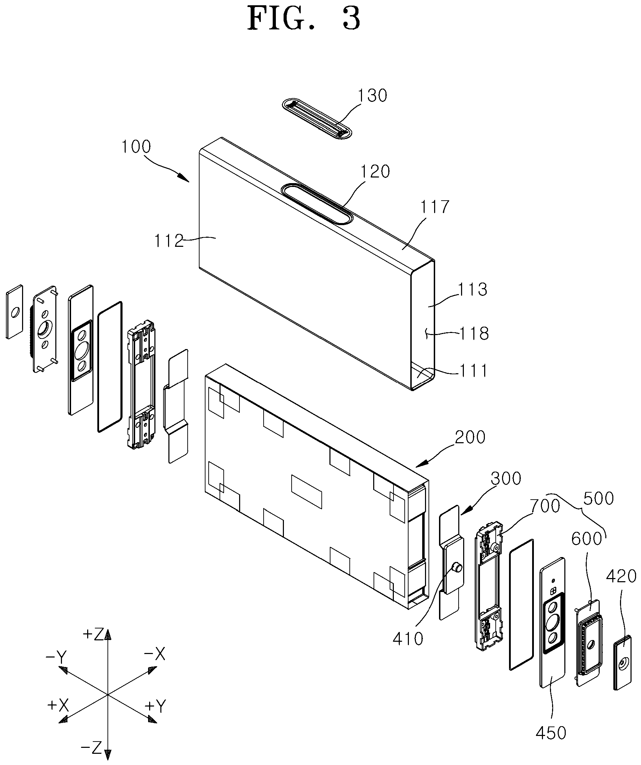

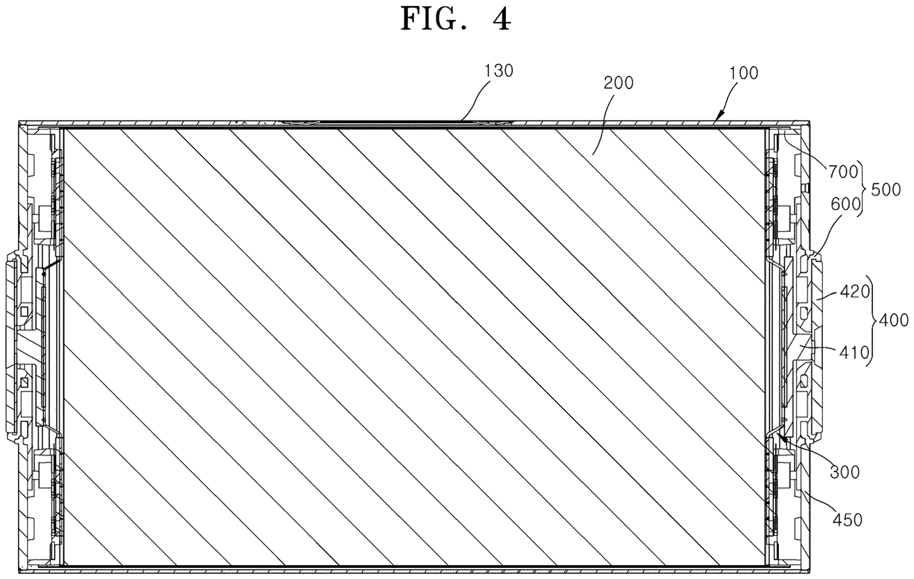

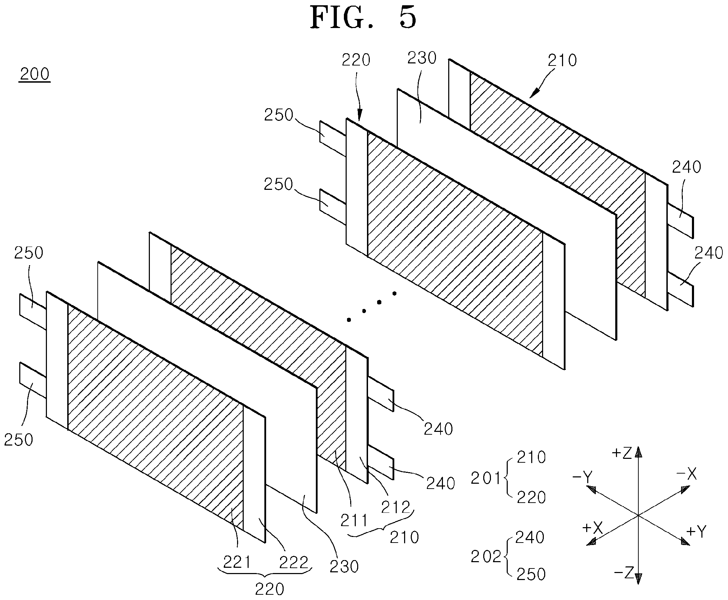

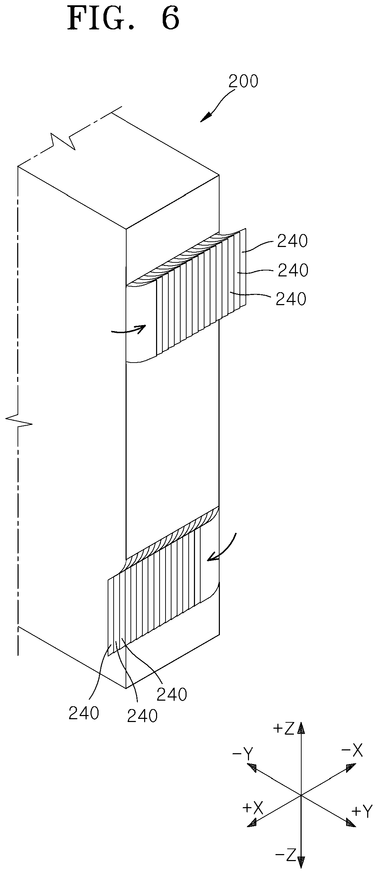

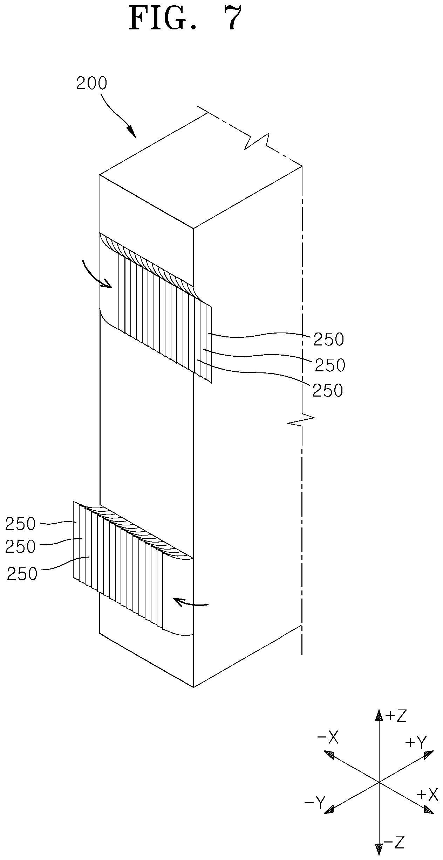

FIG. 2 is a schematic perspective view illustrating a structure of the secondary battery according to an embodiment of the present invention; and FIG. 3 is a schematic exploded perspective view illustrating the structure of the secondary battery according to an embodiment of the present invention. FIG. 4 is a cross-sectional view along the line A-A of FIG. 2; and FIG. 5 is a schematic view illustrating a structure of an electrode assembly according to an embodiment of the present invention. FIG. 6 is a schematic view illustrating a structure of a positive tab of the electrode assembly according to an embodiment of the present invention. FIG. 7 is a schematic view illustrating a structure of a negative tab of the electrode assembly according to an embodiment of the present invention.

A first direction described below may be a -X-axis direction based on FIGS. 2 and 3, a second direction may be the +Y-axis direction based on FIGS. 2 and 3, and a third direction may be a -Z-axis direction based on FIGS. 2 and 3.

Herein, an example of the secondary battery which is an angular or polygonal lithium-ion secondary battery will be described. However, the present invention is not limited thereto, and the secondary battery may be a lithium polymer battery or cylindrical battery, for example.

Referring to FIGS. 2 to 7, the secondary battery 2 according to the present embodiment includes an electrode assembly 200, a case 100, a connection member 300, a side terminal 400, a cap plate 450, and an insulating part 500.

The electrode assembly 200 includes an electrode tab and may include an electrode plate. The electrode plate may include a positive plate 210 and a negative plate 220, and the electrode tab may include a positive tab 240 and a negative tab 250.

The positive plate 210 may function as a positive electrode of the electrode assembly 200.

The positive plate 210 according to the present embodiment may be formed in a shape of a foil including a metal material, such as aluminum or an aluminum alloy. Both, or opposite, surfaces of the positive plate 210 may be disposed to be perpendicular to the first direction. A type, a size, and a shape of the positive plate 210 are not specifically limited as long as a metal material does not cause a chemical change in the secondary battery 2 and has conductivity. A design of the shape of the positive plate 210 may be varied to any of various shapes other than a rectangular shape, as illustrated in FIG. 5.

The positive plate 210 may be provided as a plurality of positive plates 210. The plurality of positive plates 210 may be disposed between a front portion 112 and a rear portion 113 of the case 100 in the first direction. A design of the number of positive plates 210 may be variously changed according to a charging capacity or the like of the secondary battery 2.

The positive plate 210 may include a first active material layer 211 and a first non-coating portion 212.

The first active material layer 211 may be provided to be applied on at least a portion of the positive plate 210. In an embodiment, the first active material layer 211 may be applied on each of both, or opposite, surfaces of the positive plate 210. However, the first active material layer 211 may be applied on only one surface of the positive plate 210.

In the present embodiment, as the positive plate 210 functions as the positive electrode, the first active material layer 211 may include a positive active material.

The positive active material may be a reversible intercalation and deintercalation compound (lithiated intercalation compound) for lithium. In an embodiment, one or more compound oxides of a metal selected from the group consisting of cobalt, manganese, nickel, iron, and a combination thereof and lithium may be used as the positive active material.

As an example, the positive active material may include any of a lithium-iron-phosphorus oxide (LiFePO₄, LFP), a lithium-manganese-iron-phosphorus oxide (LiMnFePO₄, LMFP), and a lithium-nickel-cobalt-manganese oxide (LiNiₓCo_{y}Mn_{z}O₂, NCM). Here, 0<x<1, 0<y<1, 0<z<1, and x+y+z=1. The positive active material may include any one of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, LNCM), or may include any two or all of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, LNCM).

The first active material layer 211 may further include a positive conductive material.

The positive conductive material is used for providing conductivity to the first active material layer 211, and any suitable material may be used as the positive conductive material as long as the material does not chemically change the first active material layer and is an electronically conductive material. An example of the positive conductive material may be a carbon-based material such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer such as a polyphenylene derivative, or a mixture thereof.

The first active material layer 211 may further include a positive electrode binder.

The positive electrode binder may easily attach particles constituting the positive active material and attach the positive active material to the positive plate 210.

A non-aqueous binder, an aqueous binder, a dry binder, or a combination thereof may be used as an example of the positive electrode binder.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from the group consisting of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the first active material layer may further include a cellulose compound which provides viscosity. One or more of carboxymethyl cellulose, hydroxypropyl methyl cellulose, methyl cellulose, and alkaline metal salts thereof may be mixed and used as the cellulose compound. Na, K, or Li salts may be used as an alkaline metal salt.

The dry binder is a fibrous polymer material, and may be, for example, polytetrafluoroethylene, polyvinylidene fluoride, a polyvinylidene fluoride-hexafluoropropylene copolymer, polyethylene oxide, or a combination thereof.

The positive plate 210 may include the first non-coating portion 212 on which the first active material layer 211 is not applied. The first non-coating portion 212 according to the present embodiment may be disposed in a region of an end portion of the positive plate 210 disposed toward an opening 118 of the case 100. However, a form of the first non-coating portion 212 is not limited thereto, and, in an embodiment, the first non-coating portion 212 may be formed along an entire edge region of the positive plate 210.

The negative plate 220 may function as a negative electrode of the electrode assembly 200.

The negative plate 220 according to the present embodiment may be formed in a shape of a foil including a metal material, such as copper, a copper alloy, nickel, or a nickel alloy. Both, or opposite, surfaces of the negative plate 220 may be disposed perpendicular to the first direction. A type, a size, and a shape of the negative plate 220 are not specifically limited as long as a metal material does not cause a chemical change in the secondary battery and has conductivity. A design of a cross-section of the negative plate 220 may be changed to any of various shapes other than a rectangular shape, as illustrated in FIG. 4.

The negative plate 220 may be provided as a plurality of negative plates 220. The plurality of negative plates 220 may be disposed between the front portion 112 and the rear portion 113 of the case 100 in the first direction. The plurality of positive plates 210 and the plurality of negative plates 220 may be alternately disposed in the first direction. The positive plate 210 and the negative plate 220 may be spaced by a distance (e.g., a predetermined distance) from each other in the first direction.

The negative plate 220 may be disposed to face the positive plate 210 in the first direction.

The negative plate 220 may include a second active material layer 221 and a second non-coating portion 222.

The second active material layer 221 may be provided to be applied on at least a portion of the negative plate 220. In an embodiment, the second active material layer 221 may be applied on each of both, or opposite, surfaces of the negative plate 220. However, the second active material layer 221 may be applied on only one surface of the negative plate 220.

In an embodiment, the negative plate 220 functions as a negative electrode, and the second active material layer 221 may include a negative active material.

The negative active material may include a material into which lithium ions may be reversibly intercalated and/or from which lithium ions may be reversibly deintercalated, a lithium metal, a lithium metal alloy, a material which may be doped in and undoped from lithium, or a transition metal oxide.

The material into which lithium ions may be reversibly intercalated and/or from which lithium ions may be reversibly deintercalated may include a carbon-based negative active material, such as crystalline carbon, amorphous carbon, or a combination thereof. An example of the crystalline carbon may be graphite, such as natural graphite or artificial graphite in an amorphous, flake, spherical, or fibrous form, and an example of the amorphous carbon may be soft or hard carbon, mesophase pitch carbide, fired coke, or the like.

An alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used as the lithium metal alloy.

A Si-based negative active material or a Sn-based negative active material may be used as the material which may be doped in and undoped from lithium. The Si-based negative active material may be silicon, a silicon-carbon composite, SiOₓ (0<x<2), a Si-Q alloy (Q is selected from the group consisting of alkaline metals, alkaline earth metals, Group 13 elements, Group 14 elements (excluding Si), Group 15 elements, Group 16 elements, transition metals, rare earth elements, and combinations thereof), or a combination thereof. The Sn-based negative active material may be Sn, SnO₂, a Sn-based alloy, or a combination thereof.

The silicon-carbon composite may be a composite of silicon and amorphous carbon. According to an embodiment, the silicon-carbon composite may have a form in which amorphous carbon is applied on surfaces of silicon particles. For example, the silicon-carbon composite may include secondary particles (core) in which silicon primary particles are assembled and amorphous carbon coated layers (shell) located on surfaces of the secondary particles. The amorphous carbon may also be located between the silicon primary particles such that, for example, the silicon primary particles may be coated with the amorphous carbon. The secondary particles may be dispersed in an amorphous carbon matrix.

The silicon-carbon composite may also further include crystalline carbon. For example, the silicon-carbon composite may include a core including the crystalline carbon and the silicon particles and the amorphous carbon coated layer located on a surface of the core.

The Si-based negative active material or the Sn-based negative active material may be mixed with the carbon-based negative active material and used.

The second active material layer 221 may further include a negative conductive material and a negative electrode binder.

The negative conductive material provides conductivity to the second active material layer 221, and any suitable material may be used as the negative conductive material as long as the material does not cause a chemical change in the second active material layer and is an electronically conductive material. An example of the negative conductive material may be a carbon-based material, such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer such as a polyphenylene derivative, or a mixture thereof.

The negative electrode binder may easily attach particles constituting the negative active material and attach the negative active material to the negative plate 220.

A non-aqueous binder, an aqueous binder, a dry binder, or a combination thereof may be used as an example of the negative electrode binder.

The non-aqueous binder may be polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be one selected from the group consisting of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, the first active material layer may further include a cellulose compound which provides viscosity. One or more of carboxymethyl cellulose, hydroxypropyl methyl cellulose, methyl cellulose, and alkaline metal salts thereof may be mixed and used as the cellulose compound. Na, K, or Li salts may be used as an alkaline metal salt.

The dry binder is a fibrous polymer material, and may be, for example, polytetrafluoroethylene, polyvinylidene fluoride, a polyvinylidene fluoride-hexafluoropropylene copolymer, polyethylene oxide, or a combination thereof.

The negative plate 220 may include the second non-coating portion 222 on which the second active material layer 221 is not applied. In an embodiment, the second non-coating portion 222 may be formed along an entire edge region of the negative plate 220.

A separation membrane 230 may be disposed between the positive plate 210 and the negative plate 220. The separation membrane 230 may allow lithium ions to move between the positive plate 210 and the negative plate 220 and prevent or substantially prevent a short circuit between the positive plate 210 and the negative plate 220.

In an embodiment, the separation membrane 230 may be disposed around (e.g., to surround) an entire surface region of the electrode assembly 200. Accordingly, the separation membrane 230 may prevent or substantially prevent the positive plate 210 and the negative plate 220 from being directly exposed to the outside of the electrode assembly 200.

In an embodiment, polyethylene, polypropylene, polyvinylidene fluoride, or a multilayer membrane with two or more layers thereof may be used as the separation membrane 230, and a mixed multilayer membrane, such as any of a two-layer separator with polyethylene/polypropylene, a three-layer separator with polyethylene/polypropylene/polyethylene, and a three-layer separator with polypropylene/polyethylene/polypropylene may be used as the separation membrane 230.

The separation membrane 230 may include a porous substrate and a coated layer which is located on a surface or both surfaces of the porous substrate and includes an organic material, an inorganic material, or a combination thereof.

The porous substrate may be any polymer selected from the group consisting of polyolefins, such as polyethylene and polypropylene, polyesters such as polyethylene terephthalate and polybutylene terephthalate, polyacetal, polyamide, polyimide, polycarbonate, polyetherketone, polyaryl etherketone, polyetherimide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a polymer membrane formed of two or more of these copolymers or mixtures.

The organic material may include a polyvinylidene fluoride-based polymer or (meth)acrylic-based polymer.

The inorganic material may include inorganic particles selected from the group consisting of Al₂O₃, SiO₂, TiO₂, SnO₂, CeO₂, MgO, NiO, CaO, GaO, ZnO, ZrO₂, Y₂O₃, SrTiO₃, BaTiOs, Mg(OH)₂, boehmite and a composition thereof, but is not limited thereto.

The organic material and the inorganic material may be mixed and exist in a coated layer or exist in a form in which a coated layer including the organic material and a coated layer including the inorganic material are stacked.

The positive tab 240 may be connected to the positive plate 210. The positive tab 240 may provide an electrical connection between the positive plate 210 and the connection member 300 which will be described below.

The positive tab 240 may be provided as a plurality of positive tabs 240. The positive tabs 240 may extend from the positive plates 210 which are different from each other in the second direction. The plurality of positive tabs 240 may be stacked in the first direction

The positive tab 240 may be bent in the first direction. That is, an end portion of the positive tab 240 may have a form that is bent in the first direction. Accordingly, the positive tab 240 may increase a contact surface with a sub-plate 310 of the connection member 300 which will be described below. The positive tab 240 may be bent in the case 100 in a direction from the front portion 112 toward the rear portion 113 or a direction from the rear portion 113 toward front portion 112.

As the positive tabs 240 are bent in the first direction, a sum of thicknesses of the plurality of positive tabs 240 stacked in the first direction may be greater than a thickness of the electrode assembly 200 in the first direction. As illustrated in FIG. 6, end portions of some positive tabs 240 located relatively adjacent to the rear portion 113 among the plurality of positive tabs 240 stacked in the first direction may protrude from the electrode assembly 200 toward the rear portion 113.

The negative tab 250 may be connected to the negative plate 220. The negative tab 250 may provide electrical connection between the negative plate 220 and the connection member 300 which will be described below.

The negative tab 250 may be provided as a plurality of negative tabs 250. The negative tabs 250 may extend from the negative plates 220 which are different from each other in a direction opposite to the second direction. The plurality of negative tabs 250 may be stacked in the first direction.

The negative tab 250 may be bent in a direction opposite to the first direction. That is, an end portion of the negative tab 250 may have a form that is bent in the direction opposite to the first direction. Accordingly, the negative tab 250 may increase a contact surface with the sub-plate 310 of the connection member 300 which will be described below. The negative tab 250 may be bent in the case 100 in the direction from the rear portion 113 toward the front portion 112 or the direction from the front portion 112 toward the rear portion 113.

As the negative tabs 250 are bent in the direction opposite to the first direction, a sum of thicknesses of the plurality of negative tabs 250 stacked in the first direction may be greater than the thickness of the electrode assembly 200 in the first direction. As illustrated in FIG. 7, end portions of some negative tabs 250 located relatively adjacent to the front portion 112 among the plurality of negative tabs 250 stacked in the first direction may protrude from the electrode assembly 200 toward the front portion 112.

The case 100 according to the present embodiment may include a bottom portion 111, the front portion 112, the rear portion 113, a ceiling portion 117, and openings 118. In an embodiment, the case 100 may be formed in a rectangular shape, the openings 118 may be formed at both sides of the case 100, and the case 100 may be formed to be hollow.

The ceiling portion 117 may form an upper exterior (based on FIG. 3) of the case 100. The ceiling portion 117 according to an embodiment may have a rectangular plate shape. The ceiling portion 117 may be disposed to face the bottom portion 111 in the third direction. The ceiling portion 117 may be disposed to be spaced by a distance (e.g., a predetermined distance) from the bottom portion 111 in a direction opposite to the third direction.

The electrode tab 202 of the electrode assembly 200 may be disposed toward the corresponding opening 118.

The case 100 according to an embodiment may further include a vent hole 120 and a vent 130.

The vent hole 120 according to an embodiment may be formed to have a form of a hole perpendicularly passing through the ceiling portion 117 in the third direction. The vent hole 120 may provide a passage through which a flame, gas, smoke, and the like generated in the case 100 if thermal runaway of the secondary battery occurs due to an overcurrent or the like are discharged to the outside of the case 100. However, a design of a cross-section of the vent hole 120 may be varied to any of various shapes, such as an elliptical shape, a circular shape, and a polygonal shape.

The vent 130 may be installed in the vent hole 120 and opened or closed in conjunction with a change in internal pressure of the case 100. That is, the vent 130 may close the vent hole 120 to prevent or substantially prevent an electrolyte in the case 100 from being leaked to the outside of the case 100 or moisture, foreign matter, and the like from being introduced into the case 100 when the secondary battery operates normally. The vent 130 may open the vent hole 120 to induce a flame, gas, smoke, and the like generated in the case 100 to be discharged to the outside of the case 100 when a thermal runaway occurs in the secondary battery.

The vent 130 according to an embodiment may be formed in a generally plate shape. The vent 130 may be fixed to the ceiling portion 117 of the case 100 through any of various coupling methods, such as welding, bolting, and fit-coupling methods.

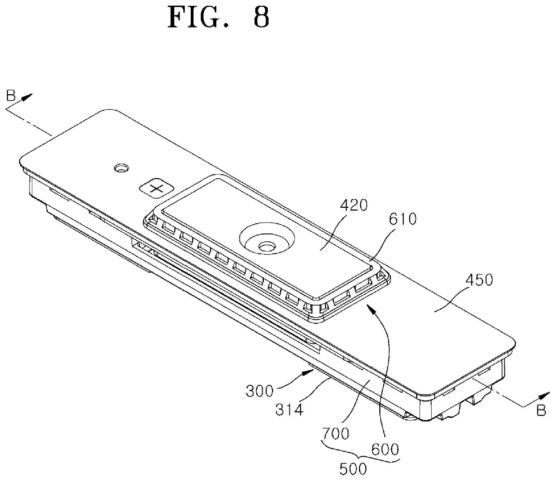

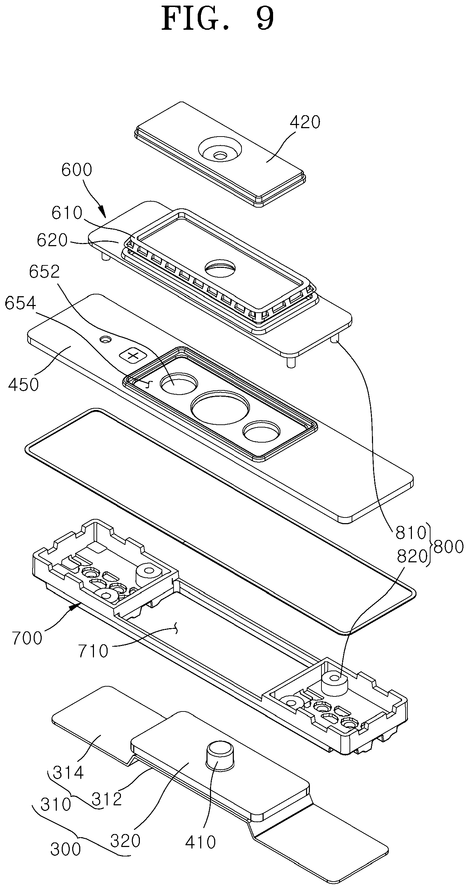

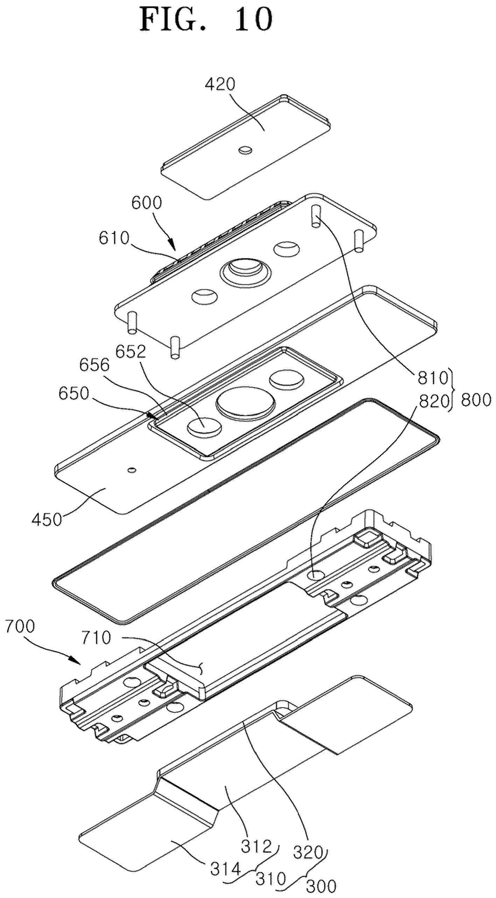

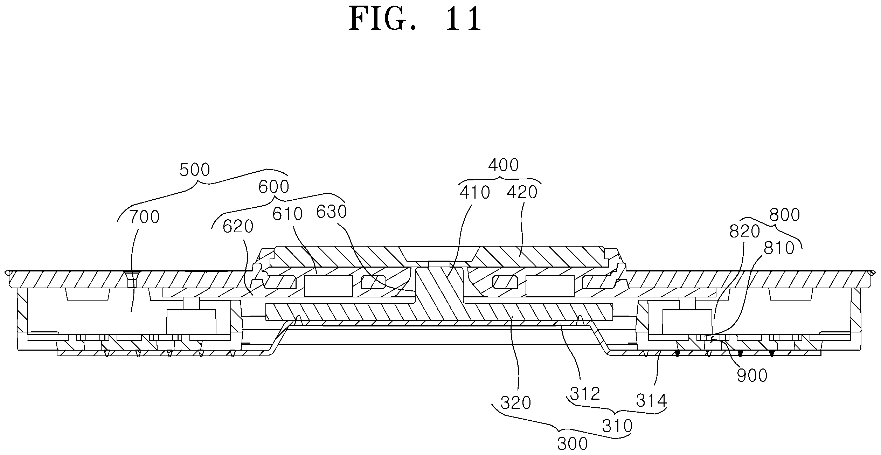

FIG. 8 is a schematic perspective view illustrating a structure of some components (e.g., main components) of the secondary battery according to an embodiment of the present invention; FIG. 9 is a schematic exploded perspective view illustrating the structure of the components of the secondary battery according to an embodiment of the present invention; and FIG. 10 is a schematic exploded perspective view from another angle that illustrates the structure of the components of the secondary battery according to an embodiment of the present invention. FIG. 11 is a cross-sectional view along the line B-B of FIG. 8.

Referring to FIGS. 8 to 11, the connection member 300 according to an embodiment may include the sub-plate 310 which is in contact with and is coupled to the electrode tab 202 of the electrode assembly 200 and a current collector 320 of which an end is coupled to the sub-plate 310 through welding and which is coupled to the side terminal 400 through welding.

The connection member 300 may be provided as a pair of connection members 300. The connection members 300 may be in contact with and coupled to the electrode tabs 202, provided on both, or opposite, sides of the case 100, and coupled to the positive tab 240 and the negative tab 250.

The sub-plate 310 may form a side exterior of the connection member 300 and may be connected to the electrode tab 202. The sub-plate 310 may include a center plate 312 and side plates 314 extending from the center plate 312 toward both, or opposite, sides.

In an embodiment, the center plate 312 may form a central exterior of the sub-plate 310 and entirely support the side plates 314 at both sides. The center plate 312 may be formed in a generally flat plate shape. In an embodiment, the side plate 314 and the electrode tab 202 may be integrally bonded through laser welding, ultrasonic welding, or the like. Accordingly, a welding line for connection with the electrode tab 202 may be formed on the side plate 314, and the welding line may fix all of the plurality of stacked electrode tabs 202 to the side plate 314.

The current collector 320 according to the present embodiment may be formed of a material through which a current may flow, such as aluminum, copper, or nickel. The current collector 320 may be disposed between the electrode assembly 200 and the cap plate 450 to face the electrode assembly 200 and the cap plate 450.

A side of the current collector 320 may be connected to the sub-plate 310. As an example, the current collector 320 may be connected to an upper end portion of the center plate 312. The current collector 320 may be connected thereto through any of various coupling methods, such as welding and bolting methods.

The side terminal 400 according to an embodiment is electrically connected to the connection member 300. The side terminal 400 may include a boss terminal 410 formed on the connection member 300 to pass through the cap plate 450 and an external terminal 420 disposed outside the cap plate 450 and welded to the boss terminal 410.

The side terminal 400 may be provided as a pair of side terminals 400. The side terminal 400 is coupled to the connection member 300, provided at each of both, or opposite, sides of the case 100, and may be electrically connected to each of the positive tab 240 and the negative tab 250 through the connection member 300.

In an embodiment, the boss terminal 410 may be integrally formed to protrude from a central portion of the current collector 320. The boss terminal 410 may be connected to the external terminal 420 disposed outside the cap plate 450. As an example, the boss terminal 410 may pass through the cap plate 450 and may be in contact with a lower end portion of the external terminal 420. An upper surface of the boss terminal 410 may be connected to the lower end portion of the external terminal 420 through any of various coupling methods, such as welding and bolting methods.

The cap plate 450 according to an embodiment may close the opening 118. In an embodiment, the cap plate 450 may be provided as a pair of cap plates 450 to close the openings 118 of both, or opposite, sides of the case 100.

The cap plate 450 according to an embodiment may be formed to have a flat plate shape. The cap plate 450 may be disposed on the opening 118 of the case 100. The cap plate 450 may be disposed to face the electrode tab 202 of the electrode assembly 200. An edge region of the cap plate 450 may be coupled to end portions of the bottom portion 111, the front portion 112, the rear portion 113, and the ceiling portion 117 through any of various coupling methods, such as welding, bolting, and fit-coupling methods.

The insulating part 500 according to an embodiment is configured to insulate the cap plate 450 from the side terminal 400, and the cap plate 450 from the electrode assembly 200.

The insulating part 500 may be provided as a pair of insulating parts 500 facing each other. The insulating parts 500 insulate the cap plate 450 from the side terminal 400, and the cap plate 450 from the electrode assembly 200, and may be provided at both, or opposite, sides of the case 100.

As an example, the insulating parts 500 may include a first insulator 600 which insulates the cap plate 450 from the side terminal 400 and a second insulator 700 which insulates the cap plate 450 from the electrode assembly 200.

The first insulator 600 may include a first plate 610 disposed between the external terminal 420 and the cap plate 450, a second plate 620 disposed between the cap plate 450 and the connection member 300, and a connection part 630 connecting the first plate 610 and the second plate 620 and surrounding the boss terminal 410.

The first plate 610 and the second plate 620 may each be formed to have a substantially flat plate shape. The first insulator 600 may be formed of an insulating material, such as polyethylene (PE), polypropylene (PP), polyethylene terephthalate (PET), or rubber, for example.

In an embodiment, the first insulator 600 may be insert-injected on the cap plate 450. That is, the first insulator 600 may be insert-injected on the cap plate 450 such that the first plate 610 may be disposed on an upper surface of the cap plate 450, and the second plate 620 may be disposed on a lower surface of the cap plate 450. In addition, the connection part 630 connecting the first plate 610 and the second plate 620 may form a space in which the boss terminal 410 may be accommodated.

A movement prevention part 650 for preventing or substantially preventing movement of the first insulator 600 may be formed on the cap plate 450. The movement prevention part 650 may include a communication hole 652 formed to pass through the cap plate 450 such that the first plate 610 is connected to the second plate 620, a first seating groove 654 formed in the upper surface of the cap plate 450 such that the first plate 610 is seated on the first seating groove 654, and a second seating groove 656 formed in the lower surface of the cap plate 450 such that a portion of the second plate 620 is accommodated in the second seating groove 656.

The second insulator 700 may be disposed between the connection member 300 and the electrode assembly 200 and may electrically insulate the connection member 300 from the electrode assembly 200. The second insulator 700 according to the present embodiment may be formed to have a generally flat plate shape. An open hole 710 may be formed in a central portion of the second insulator 700 to expose the current collector 320, and both, or opposite, surfaces thereof may be in contact with an upper surface of the electrode assembly 200. The second insulator 700 may be formed of an insulating material, such as PE, PP, PET, or rubber.

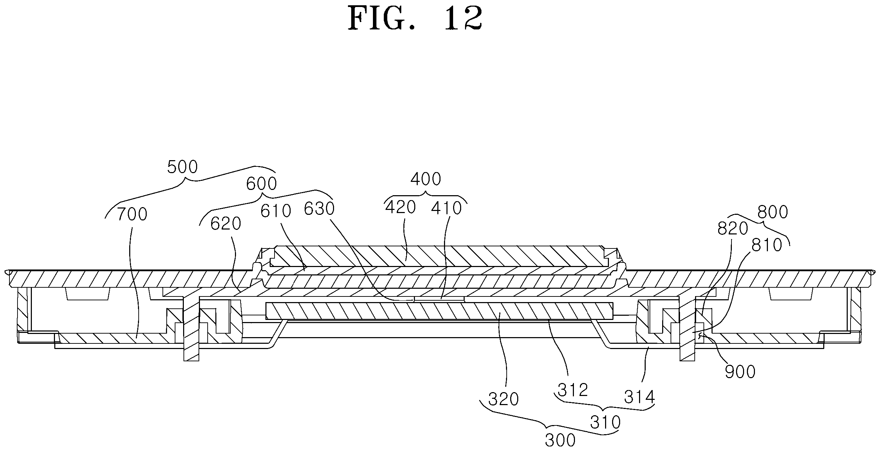

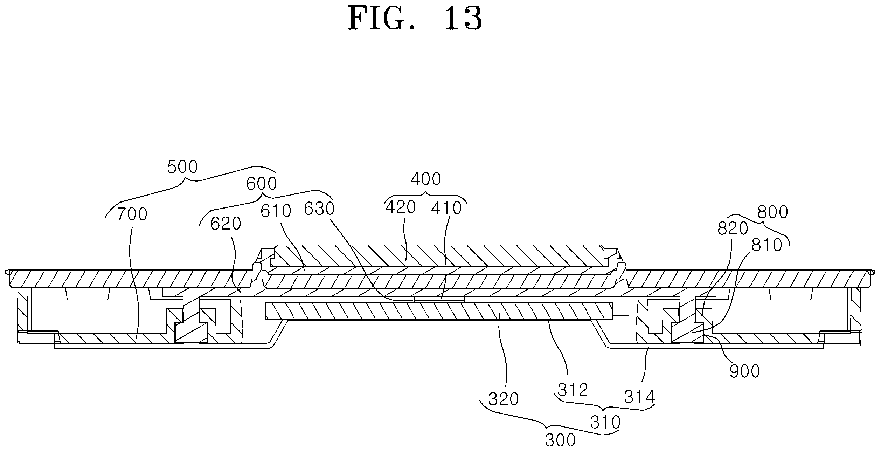

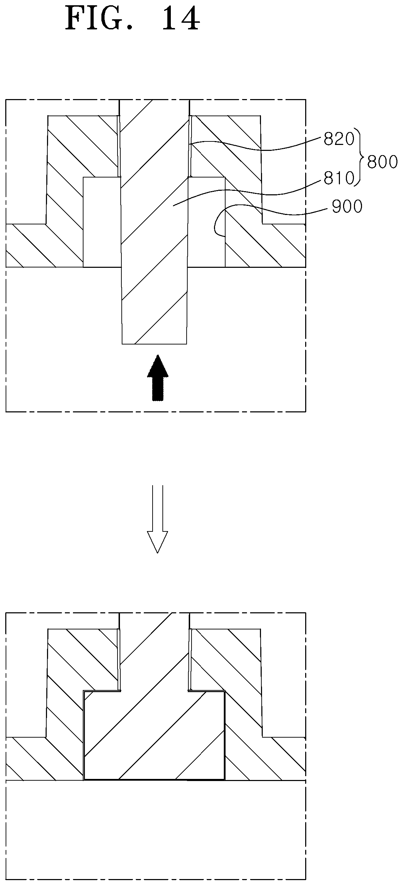

FIG. 12 is a schematic cross-sectional view illustrating a coupling state of a coupling part according to an embodiment of the present invention; FIG. 13 is a cross-sectional view illustrating a state in which the coupling part is coupled through hot stacking according to an embodiment of the present invention; and FIG. 14 is a schematic cross-sectional view illustrating a coupling reinforcement part of the secondary battery according to an embodiment of the present invention.

Referring to FIGS. 12 to 14, the first insulator 600 and the second insulator 700 according to an embodiment may be integrally formed using a coupling part 800. As an example, the coupling part 800 may include a coupling post 810 formed to protrude downward from the first insulator 600 and a coupling hole 820 formed in the second insulator 700 such that the coupling post 810 is coupled to the coupling hole 820.

In an embodiment, the coupling post 810 and the coupling hole 820 may be provided as a plurality of coupling posts 810 and a plurality of coupling holes 820 which correspond to each other. The coupling post 810 and the coupling hole 820 may be provided as the plurality of coupling posts 810 and the plurality of coupling holes 820 which correspond to each other in regions of the first insulator 600 and the second insulator 700, and numbers thereof may be variously changed.

In an embodiment, the coupling post 810 may be coupled to the coupling hole 820 through a hot stacking method. The hot stacking method is a method of heating the coupling post 810 inserted into the coupling hole 820 to melt a protruding portion thereof such that a melted material is fixedly stuck to surroundings of the coupling hole 820.

The coupling post 810 may be formed to have a greater length than a length of the coupling hole 820. That is, the coupling post 810 may be formed to have a length to enter through a side of the coupling hole 820 and protrude from another side thereof. Accordingly, the portion protruding outward from the another side of the coupling hole 820 may be melted and fixedly stuck to the surroundings of the coupling hole 820 through the hot stacking method.

In an embodiment, the coupling hole 820 may include a coupling reinforcement part 900 which reinforces coupling with the coupling post 810. In an embodiment, the coupling reinforcement part 900 may be formed as multiple stepped surfaces on an inner surface of the coupling hole 820. That is, as illustrated in FIG. 12, as the inner surface of the coupling hole 820 is formed as multiple stepped surfaces having different diameters in an entry direction of the coupling post 810, has a wide contact area because the coupling post 810 which is melted through the hot stacking method fills the coupling hole 820, and functions as a hooking step, separation of the first insulator 600 and the second insulator 700 can be more effectively prevented.

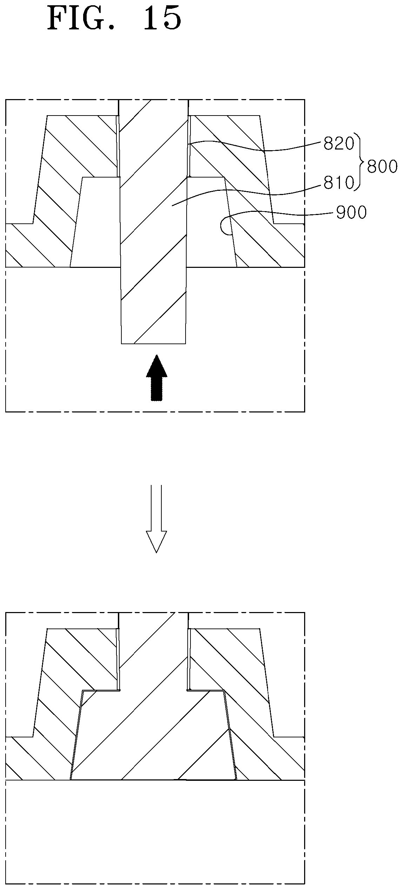

FIGS. 15 to 17 are cross-sectional views showing modified examples of the coupling reinforcement part of the secondary battery according to some embodiments of the present invention.

Referring to FIGS. 15 to 17, a shape of a coupling reinforcement part 900 according to the present embodiment may be variously changed, and separation of a first insulator 600 and a second insulator 700 may be prevented or substantially prevented by the coupling reinforcement part 900.

Referring to FIG. 15, in an embodiment, the coupling reinforcement part 900 may be formed as a tapered surface on an inner surface of a coupling hole 820. The inner surface of the coupling hole 820 may be formed as the tapered surface which is enlarged from a side through which a coupling post 810 enters toward another side. In this case, as a length of the coupling post 810 is greater than a length of the coupling hole 820, and the coupling post 810 melted through a hot stacking method fills the coupling hole 820 to have a diameter which increases toward a lower side and form a wide contact area, and functions as a hooking step, separation of the first insulator 600 and the second insulator 700 can be prevented or substantially prevented.

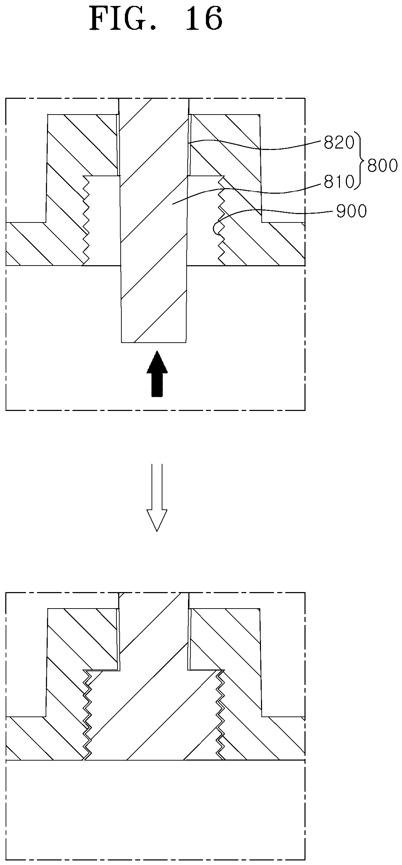

In an embodiment, referring to FIG. 16, the coupling reinforcement part 900 may be formed as an uneven surface on an inner surface of a coupling hole 820. As an example, as the inner surface of the coupling hole 820 is formed as the uneven surface having a thread shape, and a coupling post 810 melted through a hot stacking method fills the coupling hole 820 to form a wide contact area, separation of the first insulator 600 and the second insulator 700 can be prevented or substantially prevented.

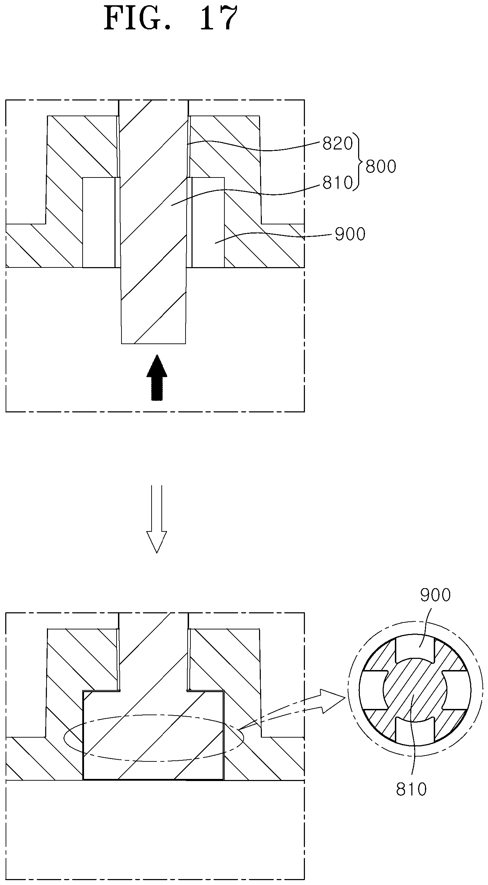

In an embodiment, referring to FIG. 17, the coupling reinforcement part 900 may be formed as a plurality of ribs formed inside a coupling hole 820. A diameter of the coupling hole 820 may be greater than a diameter of a coupling post 810, and the plurality of ribs may be formed to protrude from an inner surface of the coupling hole 820 toward a center thereof. As an example, the plurality of ribs may be disposed to be spaced apart from each other on the inner surface of the coupling hole 820 in all directions. As the ribs protrude, grooves are formed in the inner surface of the coupling hole 820, the coupling post 810 melted through a hot stacking method fills the coupling hole 820 to form a wide contact area and serves as a hooking step, and thus separation of the first insulator 600 and the second insulator 700 can be prevented or substantially prevented.

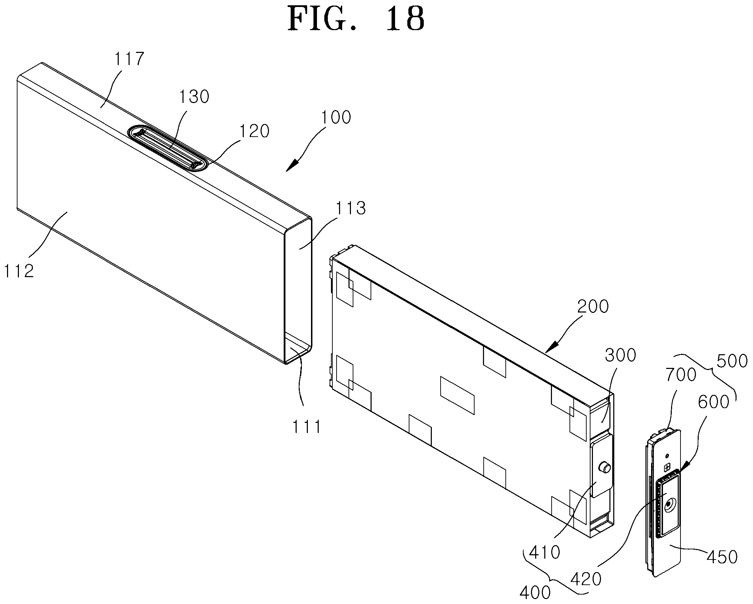

FIG. 18 is a schematic view showing an assembly process of the secondary battery according to an embodiment of the present invention.

Referring to FIG. 18, in the secondary battery according to an embodiment, the side terminal 400, the cap plate 450, and the insulating part 500 may be modularized as one component such that assemblability can be improved.

In an embodiment, the external terminal 420, the cap plate 450, and the first insulator 600 may be formed through insert-injection, and the first insulator 600 and the second insulator 700 may be integrated with each other and formed as a cap assembly, which is one component, using the coupling post 810 and the coupling hole 820 through hot stacking. In an embodiment, components may be supplied as one component, and an existing process of seating the second insulator 700 and an "11-shaped" tape attachment process for fixing the second insulator 700 may can be omitted.

In the assembly, the connection member 300 is coupled to the taped electrode assembly 200 through welding, the electrode assembly 200 is inserted into the case 100, the side terminal 400, the cap plate 450, and the insulating part 500 which are modularized and provided as one component are seated in the opening 118 of the case 100, the cap plate 450 is welded to an edge of the opening 118 of the case 100, and welding is performed for electrical connection of the external terminal 420 and the boss terminal 410 to complete the assembly.

As described above, unlike an existing method in which separate components are provided and each component is supplied separately, in the present method, as components are modularized as a cap assembly, the components can be supplied at once, and accompanying processes can be omitted, thereby simplifying a process and improving productivity.

According to embodiments of the present invention, a cap plate and an insulating part for insulation of an electrode assembly are integrated, and an unnecessary process can be omitted, thereby simplifying an assembly process, and improving insulation reliability.

According to embodiments of the present invention, a side terminal, the cap plate, and the insulating part are modularized as one component, and a taping process for fixing the insulating part can be omitted, thereby supplying the components together, simplifying an assembly process, and improving productivity.

According to embodiments of the present invention, a first insulator and the cap plate can be insert-injected and firmly fixed by a movement prevention part, the first insulator and a second insulator are coupled through a hot stacking method, a coupling structure can be simplified, and a volume can be reduced.

According to embodiments of the present invention, the first insulator and the second insulator can be firmly coupled by a coupling reinforcement part when the first insulator and the second insulator are coupled, thereby improving reliability.

However, aspects and effects obtainable through the present disclosure are not limited to the above aspects and effects, and other technical aspects and effects that are not mentioned may be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the appended claims.

## Claims

1. A secondary battery (2) comprising:
an electrode assembly (200) comprising an electrode tab (202);
a case (100) in which the electrode assembly (200) is accommodated;
a connection member (300) electrically connected to the electrode tab (202);
a side terminal (400) electrically connected to the connection member (300);
a cap plate (450) passing through the side terminal (400) and coupled to an opening (118) of the case (100); and
an insulating part (500) insulating the cap plate (450) from the side terminal (400) and insulating the cap plate (450) from the electrode assembly (200).

2. The secondary battery (2) as claimed in claim 1, wherein the side terminal (400) comprises:
a boss terminal (410) passing through the cap plate (450) and located on the connection member (300); and
an external terminal (420) located outside the cap plate (450) and welded to the boss terminal (410).

3. The secondary battery (2) as claimed in one of claims 1 or 2, wherein the insulating part (500) comprises:
a first insulator (600) insulating the cap plate (450) from the side terminal (400); and
a second insulator (700) insulating the cap plate (450) from the electrode assembly (200).

4. The secondary battery (2) as claimed in claim 3, wherein the first insulator (600) comprises:
a first plate (610) between the external terminal (420) and the cap plate (450);
a second plate (620) between the cap plate (450) and the connection member (300); and
a connection part (630) connecting the first plate (610) and the second plate (620) and surrounding the boss terminal (410).

5. The secondary battery (2) as claimed in claim 4, wherein the first insulator (600) is insert-injected on the cap plate (450).

6. The secondary battery (2) as claimed in one of claims 4 or 5, wherein a movement prevention part (650) configured to prevent movement of the first insulator (600) is located on the cap plate (450).

7. The secondary battery (2) as claimed in claim 6, wherein the movement prevention part (650) comprises:
a communication hole (652) passing through the cap plate (450) such that the first plate (610) and the second plate (620) are connected to each other;
a first seating groove (654) in an upper surface of the cap plate (450) such that the first plate (610) is seated in the first seating groove (654); and
a second seating groove (656) in a lower surface of the cap plate (450) such that a portion of the second plate (620) is accommodated in the second seating groove (656).

8. The secondary battery (2) as claimed in at least one of claims 3 to 7, wherein the first insulator (600) and the second insulator (700) are integrally provided via a coupling part (800).

9. The secondary battery (2) as claimed in claim 8, wherein the coupling part (800) comprises:
a coupling post (810) protruding downward from the first insulator (600); and
a coupling hole (820) in the second insulator (700) such that the coupling post (810) is coupled thereto.

10. The secondary battery (2) as claimed in claim 9, wherein the coupling post (810) is coupled to the coupling hole (820) through hot stacking.

11. The secondary battery (2) as claimed in one of claims 9 or 10, wherein the coupling post (810) has a greater length than a length of the coupling hole (820).

12. The secondary battery (2) as claimed in one of claims 9 to 11, further comprising a coupling reinforcement part (900) configured to reinforce coupling between the coupling hole (820) and the coupling post (810).

13. The secondary battery (2) as claimed in claim 12, wherein the coupling reinforcement part (900) comprises multiple stepped surfaces on an inner surface of the coupling hole (820).

14. The secondary battery (2) as claimed in one of claims 12 or 13, wherein the coupling reinforcement part (900) comprises a tapered surface on an inner surface of the coupling hole (820).

15. The secondary battery (2) as claimed in at least one of claims 12 to 14, wherein the coupling reinforcement part (900) comprises an uneven surface on an inner surface of the coupling hole (820).
